# EUROPEAN PATENT APPLICATION

(11) **EP 4 375 971 A1**
(43) Date of publication of application: **29.05.2024**
(21) Application number: 22214829.8
(22) Date of filing: 20.12.2022
(51) Int. Cl.: G08G 1/16, B60W 30/095, B60W 40/08, B60W 40/10, B60W 50/00, G06V 20/59

(54) **A METHOD AND APPARATUS FOR SHARING DRIVING INTENT BETWEEN AUTONOMOUS AND MANUALLY DRIVEN VEHICLES**

(30) Priority: 25.11.2022 KR 20220160481
(71) Applicant: Korea National University of Transportation Industry-Academic Cooperation Foundation, Chungju-si, Chungcheongbuk-do 27469 (KR)
(72) Inventor: MUN, Cheol, 17162 Yongin-si (KR)
(74) Representative: Botti & Ferrari S.p.A.

(57) **Abstract**

The present disclosure relates to a method and apparatus for sharing driving intent between autonomous and manually driven vehicles. The method of sharing driving intent between autonomous and manually driven vehicles according to an embodiment of the present disclosure includes: (a) acquiring vehicle control information of a vehicle by a driver and driver behavior information of the driver, and creating a global path of the vehicle on the basis of input by the driver; (b) creating driving intent information of the driver about the vehicle on the basis of the global path, the vehicle control information, and the driver behavior information; (c) creating a local path of the vehicle on the basis of the driving intent information and driving intent information about a surrounding vehicle received from the surrounding vehicle; and (d) outputting the local path of the vehicle.

## Description

### CROSS REFERENCE TO RELATED APPLICATION

The present application claims priority to Korean Patent Application No. 10-2022-0160481, filed 25 November, 2022, the entire contents of which is incorporated herein for all purposes by this reference.

### BACKGROUND OF THE INVENTION

### Field of the Invention

The present disclosure relates to a method and apparatus for sharing driving intent between vehicles and, in more detail, to a method and apparatus for sharing driving intent between autonomous and manually driven vehicles.

### Description of the Related Art

An autonomous vehicle controls itself to drive through a desired path by recognizing and determining a surrounding situation using sensors such as a camera, a Lidar, a radar, etc. mounted on the vehicle.

However, the cameras, Lidar, and radar mounted on a vehicle cannot recognize the situation of a dead zone that is an invisible area, so cooperative sensing in which a surrounding vehicle or an infra sensor (camera, Lidar, etc.) recognizes the situation of an area with a dead zone of on-board sensors of a vehicle such as an intersection in a city, an interchange, etc., and then transmits the recognized information to the vehicle through V2X communication is being developed.

Further, cooperative maneuvering in which vehicles share driving intent by transmitting and receiving the driving intent so that each vehicle can predict in advance and avoid a collision or interference in consideration of driving intent of surrounding vehicles when making a local route plan that setting a route for latter several seconds is being developed.

However, when an autonomous vehicle is driven in a manual mode or a non-autonomous vehicle is driven, a driver directly controls the vehicle, so there is a problem that driving content of the driver or a surrounding vehicle cannot be considered.

### SUMMARY OF THE INVENTION

The present disclosure has been made in an effort to solve the problems described above and an objective thereof is to provide a method and apparatus for sharing driving intent between autonomous and manually driven vehicles.

Another objective of the present disclosure is to provide a method and apparatus for predicting driving intent of a driver, automatically creating a cooperative maneuvering message from the driving intent, and transmitting the cooperative maneuvering message in an autonomous vehicle, which is driven in a manual mode in which a driver controls the vehicle, or a non-autonomous vehicle.

Another objective of the present disclosure is to provide a method and apparatus for receiving cooperative maneuvering messages from surrounding vehicles, showing maneuvers of the surrounding vehicles to a driver, and supporting the driver to drive in consideration of driving intent of the surrounding vehicles.

The objectives of the present disclosure are not limited to those described above and other objectives may be made apparent to those skilled in the art from claims.

In order to achieve the objectives, a method of sharing driving intent between autonomous and manually driven vehicles according to an embodiment of the present disclosure includes: (a) acquiring vehicle control information of a vehicle by a driver and driver behavior information of the driver, and creating a global path of the vehicle on the basis of input by the driver; (b) creating driving intent information of the driver about the vehicle on the basis of the global path, the vehicle control information, and the driver behavior information; (c) creating a local path of the vehicle on the basis of the driving intent information and driving intent information of a driver of a surrounding vehicle about the surrounding vehicle received from the surrounding vehicle; and (d) outputting the local path of the vehicle.

In an embodiment, the local path may represent a movement path of the vehicle from a start point to a destination based on input by the driver, the vehicle control information may represent control information about the vehicle that is controlled by a steering and acceleration/deceleration modules and a turn signal module of the vehicle, and the driver behavior information may represent behavior information of the driver related to control of the vehicle.

In an embodiment, the driving intent information about the vehicle may represent driving information of the vehicle by the driver, and the local path of the vehicle may represent a movement route of the vehicle for preventing a collision with the surrounding vehicle.

In an embodiment, the method of sharing driving intent between autonomous and manually driven vehicles may further include transmitting the driving intent information about the vehicle to the surrounding vehicle after the step (c).

In an embodiment, the method of sharing driving intent between autonomous and manually driven vehicles may further include monitoring whether the vehicle is controlled in accordance with the local information after the step (c).

In an embodiment, an apparatus for sharing driving intent between autonomous and manually driven vehicles includes: a vehicle control module unit acquiring vehicle control information about a vehicle by a driver; an acquiring unit acquiring driver behavior information of the driver; a control unit creating a global path of the vehicle on the basis of input by the driver, creating driving intent information of the driver about the vehicle on the basis of the global path, the vehicle control information, and the driver behavior information, and creating a local path of the vehicle on the basis of the driving intent information and driving intent information of drivers of surrounding vehicles about the surrounding vehicle received from the surrounding vehicles; and an output unit outputting the local path of the vehicle.

In an embodiment, the local path may represent a movement path of the vehicle from a start point to a destination based on input by the driver, the vehicle control information may represent control information about the vehicle that is controlled by a steering and acceleration/deceleration modules and a turn signal module of the vehicle, and the driver behavior information may represent behavior information of the driver related to control of the vehicle.

In an embodiment, the driving intent information about the vehicle may represent driving information of the vehicle by the driver, and the local path of the vehicle may represent a movement route of the vehicle for preventing a collision with the surrounding vehicle.

In an embodiment, the apparatus for sharing driving intent between autonomous and manually driven vehicles may further include a communication unit transmitting the driving intent information about the vehicle to the surrounding vehicle.

In an embodiment, the control unit may monitor whether the vehicle is controlled in accordance with the local information.

Details for achieving the objectives would be made clear by referring to the following embodiments to be described with the accompanying drawings.

However, the present disclosure is not limited to the embodiments disclosed hereafter and may be configured in various other ways, which is provided to complete the present disclosure and completely inform those having common knowledge in the art (hereafter, "those skilled in the art") of the range of the present disclosure.

According to an embodiment of the present disclosure, it is possible to predict driving intent of a driver in a manually driven vehicle, automatically create a cooperative maneuvering message from the driving intent, and transmit the cooperative maneuvering message to surrounding vehicles.

Further, according to an embodiment of the present disclosure, it is possible to show driving intent of surrounding vehicles to a driver of a manually driven vehicle and to support the driver to drive in consideration of the driving intent of the surrounding vehicles.

The effects of the present disclosure are not limited to the effects described above, and provisional effects that are expected from the technical features of the present disclosure would be clearly understood from the following description.

### BRIEF DESCRIPTION OF THE DRAWINGS

The accompanying drawings of this specification exemplify preferred embodiments and help easy understanding of the present invention together with the following detailed description, so the present invention should not be construed as being limited to the drawings.
FIG. 1 is a view showing a system for sharing driving intent between an autonomous vehicle and a manually driven vehicle according to an embodiment of the present disclosure;
FIG. 2 is a view showing a process of sharing driving intent between an autonomous vehicle and a manually driven vehicle according to an embodiment of the present disclosure;
FIG. 3 is a view showing a method sharing driving intent between an autonomous vehicle and a manually driven vehicle according to an embodiment of the present disclosure; and
FIG. 4 is a view showing the functional configuration of an apparatus for sharing driving intent between an autonomous vehicle and a manually driven vehicle according to an embodiment of the present disclosure.

### DETAILED DESCRIPTION OF THE INVENTION

The present disclosure may be modified in various ways and implemented by various exemplary embodiments, so that specific exemplary embodiments are shown in the drawings and will be described in detail.

Various features of the present disclosure disclosed in claims will be better understood in consideration of drawings and detailed description. An apparatus, a method, a manufacturing method, and various embodiments disclosed in the specification are provided for examples. The disclosed structure and functional features are provided for those skilled in the art to be able to implement various embodiments in detail rather than limiting the scope of the present disclosure. The disclosed terms and sentences are provided to easily explain the features of the present disclosure rather than limiting the scope of the present disclosure.

In describing the present invention, detailed descriptions of well-known technologies will be omitted so as not to obscure the description of the present invention with unnecessary detail

Hereafter, a method and apparatus for sharing driving intent between autonomous and manually driven vehicles according to an embodiment of the present disclosure is described.

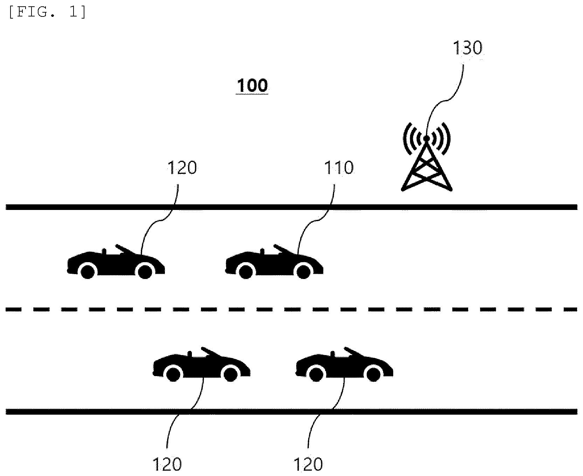

FIG. 1 is a view showing a system 100 for sharing driving intent between an autonomous vehicle and a manually driven vehicle according to an embodiment of the present disclosure.

Referring to FIG. 1, the system 100 for sharing driving intent may include a vehicle 110 and at least one surrounding vehicle 120 or a roadside infra device 130. In an embodiment, the surrounding vehicle 120 or the roadside infra device 130 may mean a vehicle and an infra structure that performs Vehicular to Everything (V2X) communication with the vehicle 110.

In an embodiment, since a situation in which vehicles that are driven in an autonomous mode and a manual mode simultaneously exist is always generated until all of the vehicles are driven in an autonomous mode, the vehicle 110 (e.g., manually driven vehicle) can predict driving intent of the driver of the vehicle 110, automatically create a cooperative maneuvering message from the driving intent, and transmit the cooperative maneuvering message to the surrounding vehicles 120 or the roadside infra device 130.

In an embodiment, the vehicle 110 can receive a cooperative maneuvering message from the surrounding vehicles 120 or the roadside infra device 130, show driving intent of the surrounding vehicle 120 to the driver of the vehicle 110 (e.g., manually driven vehicle), and support the driver to drive in consideration of the driving intent of the surrounding vehicles.

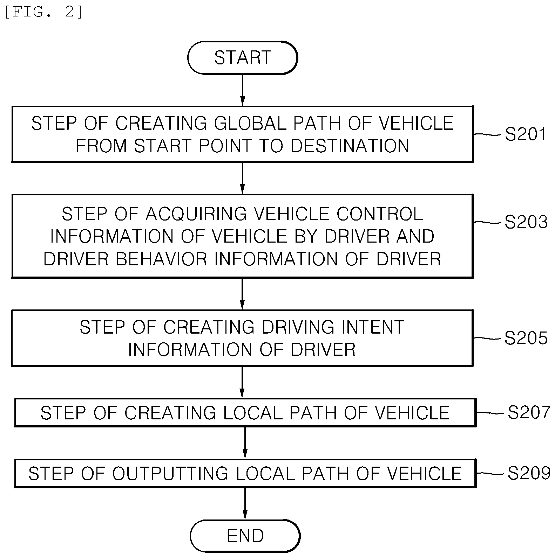

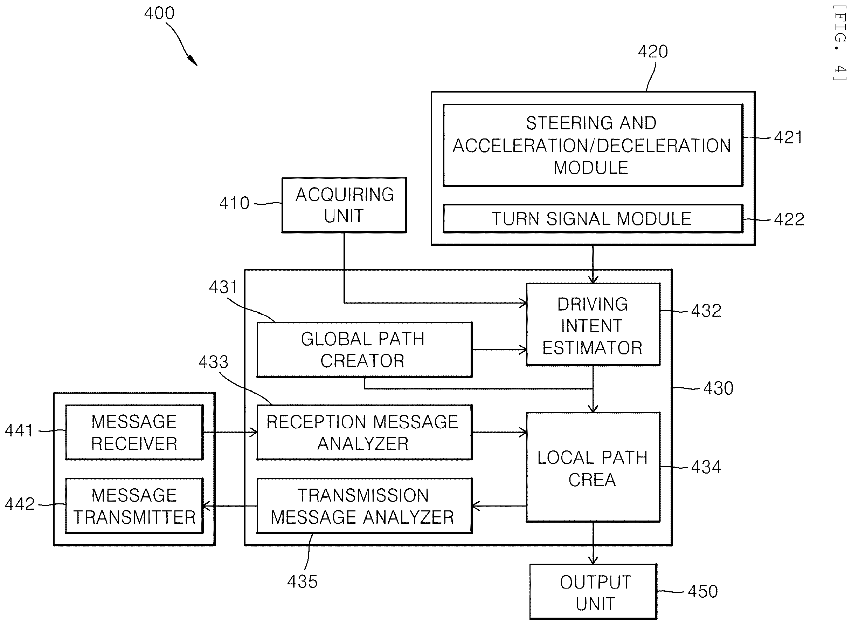

FIG. 2 is a view showing a process of sharing driving intent between an autonomous vehicle and a manually driven vehicle according to an embodiment of the present disclosure. In an embodiment, the steps shown in FIG. 2 may be performed by an apparatus 400 for sharing driving intent shown in FIG. 4.

Referring to FIG. 2, step S201 is a step of creating a global path of the vehicle 110 from a start point to a destination.

A global path planning from a current location to a destination can be made on the basis of input for the destination by a driver. In this case, the driver can control the vehicle 110 to move through the established global path. The driver can control the vehicle such as lane changing, left turning, right turning, and speed adjusting in accordance with the traffic situations in the global path.

Step S203 is a step of acquiring vehicle control information of the vehicle 110 by the driver and driver behavior information of the driver.

Vehicle control information and by the driver and driver behavior information can be extracted. For example, it is possible to extract information related to vehicle control, for example, turning on the left turn signal or a driver checking a right lane by turning his/her head to the right.

Step S205 is a step of creating driving intent information of the driver.

It is possible to create the riving intent information of the driver in consideration of the driver behavior information and the global path.

The driving intent information of the driver can be created by rule-based estimation and deep learning-based estimation. For example, the rule-based estimation may be estimating driving intent such as turning left or changing to a left lane when the left turn signal is turned on.

In an embodiment, it is possible to estimate driving intent of a driver such as turning left, turning right, going straight, etc. on the basis of the direction of the driver's gaze, the position of a head, and the dynamic movement state of a vehicle through a Long Short-Term Memory (LSTM)-based deep learning model.

Step S207 is a step of creating a local path of the vehicle 110.

In an embodiment, it is possible to receive cooperative maneuvering messages transmitted by the surrounding vehicles 120. It is possible to extract only the driving intent of other vehicles (i.e., the surrounding vehicles 12) that influences the ego vehicle (i.e., the vehicle 110) from the received several cooperative maneuvering messages. For example, it is possible to extract items of information, for example, driving intent that another vehicle driven in a next lane intends to change a lane.

It is possible to create an optimal local path corresponding to the driving intent information of the driver. In this case, it is possible to create an optimal local path that can avoid a collision or interference with the surrounding vehicles 120 using the driving intent information of the driving vehicles 120.

For example, when driving intent of a driver is to change to a left lane, it is possible to create an optimal route that can avoid a collision or interference with surrounding vehicles 120 using the driving intent information of the surrounding vehicles that are driven in the left lane area.

A cooperative maneuvering message can be created from the optimal movement route of the vehicle 110. For example, it is possible to make a route, which an ego vehicle will moves for latter 5 second, into a message in the type of 50 continuous coordinates with intervals of 0.1 seconds.

Alternatively, it is possible to extract parameters such as a start point, a speed, a direction, acceleration, etc. that can show an optimal movement route of an ego vehicle on the basis of a kinematic model, and to create a message from the parameters.

It is possible to transmit a cooperative maneuvering message to surrounding vehicles 120 on the basis of a Vehicular to Everything (V2X) vehicle communication protocol.

Alternatively, it is possible to determine whether a driver actually started to follow an optimal movement route within a predetermined time, and transmit a cooperative maneuvering message.

Step S209 is a step of outputting a local path of the vehicle 110.

It is possible to output location information of vehicle that are driven in surrounding lanes of a current driving lane and other vehicles and driving intent information of the other vehicles into the type of a movement path.

Further, it is possible to output an optimal movement route of the ego vehicle to the driver and guide the driver to be able to follow the optimal movement path.

The driver can control a steering and acceleration/deceleration module to follow or not to follow the output optimal movement path. It is possible to monitor the state of controlling the steering and acceleration/deceleration module by the driver and repeat steps 205 to 209 on the basis of the monitoring result.

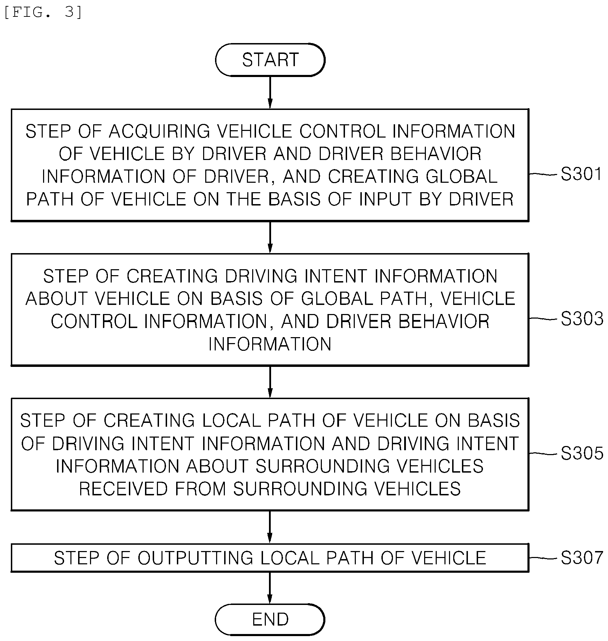

FIG. 3 is a view showing a method sharing driving intent between an autonomous vehicle and a manually driven vehicle according to an embodiment of the present disclosure. In an embodiment, the steps shown in FIG. 3 may be performed by an apparatus 400 for sharing driving intent shown in FIG. 4.

Referring to FIG. 3, step S301 is a step of acquiring vehicle control information of the vehicle 110 by the driver and driver behavior information of the driver, and creating a global path of the vehicle 110 on the basis of input by the driver.

In an embodiment, the global path may represent a movement path of the vehicle from a start point to a destination by input from a user.

In an embodiment, the vehicle control information may represent control information of the vehicle 110 controlled by a steering and acceleration/deceleration module and a turn signal module of the vehicle 110.

In an embodiment the driver behavior information may represent behavior information of the driver related to control of the vehicle 110.

Step S303 is a step of creating driving intent information about the vehicle 110 on the basis of the global path, the vehicle control information, and the driver behavior information.

In an embodiment, the driving intent information about the vehicle 110 may represent driving information of the vehicle 110 by the driver. For example, the driving intent information may include various items of driving information such as turning left, turning right, going straight, changing a lane, etc.

In an embodiment, when the driver behavior information about the vehicle 110 represents a negligent driving behavior of a driver (e.g., watching a smartphone, drowsy driving, eating food, etc.) stored in advance, it is possible to create driving intent information of the driver about the vehicle 110 on the basis of the global path and the vehicle control information.

In an embodiment, when the driver behavior information about the vehicle 110 represents a driving-related behavior of a driver (e.g., turning his/her head and checking a lane, etc.) stored in advance, it is possible to create driving intent information of the driver about the vehicle 110 on the basis of the global path, the vehicle control information, and the driver behavior information.

In this case, when vehicle driving movement represented by the vehicle control information coincides with vehicle driving movement represented by the driver behavior information, it is possible to create driving intent information by applying the same weight to the vehicle control information and the driver behavior information.

However, when vehicle driving movement represented by the vehicle control information does not coincide with vehicle driving movement represented by the driver behavior information, it is possible to create driving intent information by applying lower weight to information corresponding to information corresponding to a higher collision probability of a probability of a collision with surrounding vehicles 120 based on the vehicle control information and a probability of a collision with surrounding vehicles 120 based on the driver behavior information.

For example, when vehicle control information represents turning on the left turn signal, the vehicle driving movement is determined as the left, and when the driver behavior information represents locking at a right lane by turning a head to the right, the vehicle driving movement is determined as the right. In this case, when the vehicle 110 is moved to the left and the probability of a collision when moving to the right is higher than the probability of a collision with surrounding vehicles 120, it is possible to create driving intent information by applying lower weight to the vehicle control information than the driver behavior information.

Step S305 is a step of creating a local path of the vehicle 110 on the basis of the driving intent information about the vehicle 110, driving intent information about surrounding vehicles 120 received from the surrounding vehicles 120, and the global path.

In an embodiment, the local path of the vehicle 110 may represent a movement route of the vehicle 110 for preventing a collision with surrounding vehicles 120.

In an embodiment, the driving intent information about the vehicle 110 can be transmitted to surrounding vehicles 120 after step S305.

In an embodiment, whether the vehicle 110 is controlled in accordance with the local information can be monitored in step S305.

Step S307 is a step of outputting a local path of the vehicle 110. In an embodiment, the local information may be output as a sound through a speaker of the vehicle 110. In an embodiment, the local information may be displayed through a screen of the vehicle 110.

FIG. 4 is a view showing the functional configuration of an apparatus for sharing driving intent between an autonomous vehicle and a manually driven vehicle according to an embodiment of the present disclosure. In an embodiment, the apparatus 400 shown in FIG. 4 may include the vehicle 110 shown in FIG. 1.

Referring to FIG. 4, the apparatus 400 for sharing driving intent may include an acquiring unit 410, a vehicle control module unit 420, a control unit 430, a communication unit 440, and an output unit 450.

The acquiring unit 410 can acquire driving behavior information of a driver. In an embodiment, the acquiring unit 410 may include a camera and the camera can acquire driver behavior information by photographing a driver.

For example, the acquiring unit 410 can extract information related to vehicle control, for example, a driver checking a right lane by turning his/her head to the right.

In an embodiment, the acquiring unit 410 can acquire input for a start point and a destination by a driver. In an embodiment, the acquiring unit 410 may include a touch screen and the touch screen can acquire touch input for a start point and a destination by a driver.

The vehicle control module unit 420 can acquire vehicle control information about the vehicle 110.

In an embodiment, the vehicle control module unit 420 may include a steering and acceleration/deceleration module 421 and a turn signal module 422.

For example, the steering and acceleration/deceleration module 421 may include a steering handle at the driver seat and link mechanisms, can control a driving direction of a vehicle by changing the direction of the left and right front wheels by rotating the steering wheel and moving the link mechanism, and can increase or decrease the movement speed of the vehicle 110 including the engine and the brake of the vehicle 110. For example, the turn signal module 422 can turn on/off left and right turn signals.

The control unit 430 may include a global path creator 431, a driving intent estimator 432, a reception message analyzer 433, a local path creator 434, and a transmission message creator 435.

The global path creator 431 can create a global path of the vehicle 110 on the basis of input by the driver.

The driving intent estimator 432 can create driving intent information of the driver about the vehicle 110 on the basis of the global path, the vehicle control information, and the driver behavior information.

The reception message analyzer 433 can extract driving intent about surrounding vehicles 120 from messages (e.g., cooperative maneuvering messages) received from the surrounding vehicles 120.

The local path creator 434 can create a local path of the vehicle 110 on the basis of the driving intent information and the driving intent information about the surrounding vehicles 120 received from the surrounding vehicles 120.

The transmission message creator 435 can create a message (e.g., cooperative maneuvering message) including the driving intent information of the driver about the vehicle 110.

In an embodiment, the control unit 430 may include at least one processor or microprocessor, or may be a part of a processor. Further, the control unit 430 may be referred to as a Communication Processor (CP). The control unit 430 can control operation of the apparatus 400 for sharing driving intent according to various embodiments of the present disclosure.

The communication unit 440 may include a message receiver 441 and a message transmitter 442.

The message receiver 441 can receive a message including driving intent information of drivers of surrounding vehicles 120 about the surrounding vehicles 120 from the surrounding vehicles 120.

The message transmitter 442 can transmit a message including the driving intent information of the driver about the vehicle 110 to the surrounding vehicles 120.

In an embodiment, the communication unit 440 may include at least one of wired communication module and a wireless communication module. The communication unit 440 may be entirely or partially referred to as a 'transmitter', a 'receiver', or a 'transceiver'.

The output unit 450 can output a local path of the vehicle. In an embodiment, the output unit 450 may include a speaker and the speaker can output a local path using a sound.

In an embodiment, the output unit 450 may include a screen and the screen can display a local path. For example, the screen may include at least any one of a touch screen, a Liquid Crystal Display (LCD), a Light Emitting Diode (LED) display, an Organic LED (OLED) display, a Micro Electro Mechanical Systems (MEMS) display, and an electronic paper display.

Referring to FIG. 4, the apparatus 400 for sharing driving intent may include an acquiring unit 410, a vehicle control module unit 420, a control unit 430, a communication unit 440, and an output unit 450. In various embodiments of the present disclosure, the apparatus 400 for sharing driving intent does not necessarily include the components shown in FIG. 4, so it may include more or less components than those shown in FIG. 4.

The above description is only exemplary description of the spirit of the present disclosure and the present disclosure may be changed and modified by those skilled in the art in various ways without departing from the fundamental characteristics of the present disclosure.

Various embodiments disclosed in the specification may be performed regardless of order and may be simultaneously or separately performed.

In an embodiment, at least one step may be omitted or added in each figures described in the specification, may be performed in the reverse order, and may be simultaneously performed.

Accordingly, the embodiments described herein are provided merely not to limit, but to explain the spirit of the present disclosure, and the spirit of the present disclosure is not limited by the embodiments.

The protection range of the present disclosure should be construed on the basis of claims and all spirits that are considered as being same or equivalent to the protection range should be construed as being included in the right range of the present disclosure.

## Claims

1. A method of sharing driving intent between autonomous and manually driven vehicles, the method comprising:
(a) acquiring vehicle control information of a vehicle by a driver and driver behavior information of the driver, and creating a global path of the vehicle on the basis of input by the driver;
(b) creating driving intent information of the driver about the vehicle on the basis of the global path, the vehicle control information, and the driver behavior information;
(c) creating a local path of the vehicle on the basis of the driving intent information and driving intent information of a driver of a surrounding vehicle about the surrounding vehicle received from the surrounding vehicle; and
(d) outputting the local path of the vehicle.

2. The method of claim 1, wherein the local path represents a movement path of the vehicle from a start point to a destination based on input by the driver,
the vehicle control information represents control information about the vehicle that is controlled by a steering and acceleration/deceleration modules and a turn signal module of the vehicle, and
the driver behavior information represents behavior information of the driver related to control of the vehicle.

3. The method of claim 1, wherein the driving intent information about the vehicle represents driving information of the vehicle by the driver, and
the local path of the vehicle represents a movement route of the vehicle for preventing a collision with the surrounding vehicle.

4. The method of claim 1, further comprising transmitting the driving intent information about the vehicle to the surrounding vehicle after the step (c).

5. The method of claim 1, further comprising monitoring whether the vehicle is controlled in accordance with the local information after the step (c).

6. An apparatus for sharing driving intent between autonomous and manually driven vehicles, the apparatus comprising:
a vehicle control module unit acquiring vehicle control information about a vehicle by a driver;
an acquiring unit acquiring driver behavior information of the driver;
a control unit creating a global path of the vehicle on the basis of input by the driver, creating driving intent information of the driver about the vehicle on the basis of the global path, the vehicle control information, and the driver behavior information, and creating a local path of the vehicle on the basis of the driving intent information and driving intent information of drivers of surrounding vehicles about the surrounding vehicle received from the surrounding vehicles; and
an output unit outputting the local path of the vehicle.

7. The apparatus of claim 6, wherein the local path represents a movement path of the vehicle from a start point to a destination based on input by the driver,
the vehicle control information represents control information about the vehicle that is controlled by a steering and acceleration/deceleration modules and a turn signal module of the vehicle, and
the driver behavior information represents behavior information of the driver related to control of the vehicle.

8. The apparatus of claim 6, wherein the driving intent information about the vehicle represents driving information of the vehicle by the driver, and
the local path of the vehicle represents a movement route of the vehicle for preventing a collision with the surrounding vehicle.

9. The apparatus of claim 6, further comprising a communication unit transmitting the driving intent information about the vehicle to the surrounding vehicle.

10. The apparatus of claim 6, wherein the control unit monitors whether the vehicle is controlled in accordance with the local information.
